Europäisches Patentamt

European Patent Office

Office européen des brevets

(11) Veröffentlichungsnummer: **0 195 985**
**B1**

(12) # EUROPÄISCHE PATENTSCHRIFT

(45) Veröffentlichungstag der Patentschrift:
24.01.90

(51) Int. Cl.⁴: **G01L 9/12**

(21) Anmeldenummer: 86103429.6

(22) Anmeldetag: 14.03.86

(54) Kapazitiver Drucksensor.

(30) Priorität: 27.03.85 DE 3511187

(43) Veröffentlichungstag der Anmeldung:
01.10.86 Patentblatt 86/40

(45) Bekanntmachung des Hinweises auf die Patenterteilung:
24.01.90 Patentblatt 90/4

(84) Benannte Vertragsstaaten:
AT BE DE FR GB IT LU NL SE

(56) Entgegenhaltungen:
US-A- 4 495 820

**IEEE TRANSACTIONS ON ELECTRON DEVICES, Band ED-29, Nr. 1, Januar 1982, Seiten 48-56, IEEE, New York, US; W.H. KO et al.: "A high-sensitivity integrated-circuit capacitive pressure transducer"**
**IBM TECHNICAL DISCLOSURE BULLETIN, Band 15, Nr. 2, Juli 1972, Seite 570, New York, US; D.F. JENSEN et al.: "Capacitive switch"**

(73) Patentinhaber: **Siemens Aktiengesellschaft, Wittelsbacherplatz 2, D-8000 München 2(DE)**

(72) Erfinder: **Gassong, Siegried, Aufsessstrasse 4, D-8520 Erlangen(DE)**

## Beschreibung

Die Erfindung bezieht sich auf einen kapazitiven Drucksensor mit einer Silizium-Membran und mit einer gemeinsamen ersten Elektrode, die mit einer zweiten und dritten Elektrode jeweils einen Kondensator bildet. Die zweiten und dritten Elektroden sind gemäß der Erfindung spiegelbildlich zueinander bezüglich einer Symmetrieachse angeordnet, die senkrecht auf der Oberfläche der Silizium-Membran steht und die Silizium-Membran und die erste Elektrode in zwei gleiche Hälften teilt.

Der Druck wird als meß- und regeltechnische Größe in einer Vielzahl von Anwendungsgebieten benötigt, die von der Medizintechnik bis hin zur Kraftfahrzeugtechnik reichen. Druckmeßwandler, die auf der Basis der Siliziumtechnologie hergestellt werden, können den hohen Bedarf an billigen, kompakten und zuverlässigen Drucksensoren in zunehmendem Maße decken. Die meiste Aufmerksamkeit wurde dabei den sogenannten piezoresistiven Drucksensoren gewidmet, bei denen die durch eine Änderung des Spannungszustandes im Silizium hervorgerufenen Widerstandsänderungen gemessen werden. Die Widerstände sind selbst Teil einer elastisch deformierbaren Silizium-Membran, deren Deformationszustand wiederum von der Differenz der auf die beiden Seitenflächen der Membran wirkenden Drücke abhängt. Der Vorteil der piezoresistiven Drucksensoren besteht im wesentlichen in ihrer Kompaktheit, billigen Herstellbarkeit und ihrer leichten Handhabbarkeit bei Verwendung einer außerhalb des eigentlichen Sensorelementes gelegenen registrierenden Elektronik. Die Kompensation ihrer Temperaturabhängigkeit erfordert jedoch einen verhältnismäßig hohen Aufwand.

Eine aufwendige Temperaturkompensation ist bei kapazitiven Druckmeßwandlern nicht erforderlich, jedoch ist bei empfindlichen kapazitiven Druckmeßwandlern die Messung kleiner Kapazitätsänderungen erforderlich, die bei einer außerhalb des eigentlichen Sensorelements gelegenen Elektronik wegen der nicht vernachlässigbaren Streukapazitäten der Zuleitungen problematisch ist. Mit Hilfe der integrierten Schaltungstechnik ist es jedoch möglich, die Auswerteelektronik weitgehend in den aus Silizium bestehenden Tragkörper der Membran zu integrieren und störende Streukapazitäten zu eliminieren. Neben der geringen Temperaturabhängigkeit liegt ein weiterer Vorteil von kapazitiven Drucksensoren, die auf der Basis der Silizium-Technologie hergestellt werden, in einer gegenüber piezoresistiven Drucksensoren erhöhten Empfindlichkeit.

Es ist ein kapazitiver Drucksensor bekannt ("IEEE Transactions on Electron Devices", Vol. ED-27, No. 1, January 1982, Seiten 48 bis 56), dessen eine Elektrode aus einer Silizium-Membran besteht, die mit zwei Gegenelektroden versehen ist, die auf einer der Silizium-Membran gegenüberliegenden Glasscheibe als dünne elektrisch leitfähige Schichten voneinander elektrisch isoliert aufgebracht sind. Die erste Gegenelektrode wird durch eine kreisförmige metallische Schicht gebildet, deren senkrecht auf der Elektrodenfläche stehende Mittelachse mit der Symmetrieachse der Silizium-

Membran zusammenfällt. Die zweite Gegenelektrode ist ringförmig um die erste Gegenelektrode angeordnet. Durch diese Gestaltung erhält man zwei Kondensatoren, von denen derjenige mit der kreisförmigen Gegenelektrode wesentlich druckempfindlicher ist als der Kondensator, der von der ringförmigen Gegenelektrode und der Silizium-Membran gebildet wird, weil die Auslenkung der Membran in der Mitte maximal ist. In einer weiteren als Doppelringstruktur bezeichneten Ausführungsform werden zwei ringförmige und zwei kreisförmige Elektroden zu jeweils einer gemeinsamen Elektrode zusammengefaßt. Der Siliziumkörper, der die Membran trägt, enthält zusätzlich einen monolithisch integrierten Schaltkreis, der die vom Druck verursachte Kapazitätsänderung in eine analoge Spannung umwandelt. Als Eingangsspannung für den integrierten Schaltkreis wird eine sinusförmige Wechselspannung mit einer Frequenz im Megahertz-Bereich benötigt. Bei geeigneter Wahl der Membrandicke erhält man so im Druckbereich von $2,7 \cdot 10^3$ - $2,7 \cdot 10^4$ Pa einen nahezu linearen Zusammenhang zwischen der Druckdifferenz die an den Membranflächen wirkt und der Ausgangsspannung. Zu einem Betrieb dieses Drucksensors ist jedoch eine relativ aufwendige Steuerelektronik erforderlich und das Ausgangssignal liegt nicht in einer Form vor, die digitaltechnisch ohne Verwendung eines A/D-Wandlers weiterverarbeitet werden kann.

Weiterhin ist ein monolithischer kapazitiver Drucksensor mit einer rechteckigen Silizium-Membran bekannt (IEEE Transactions on Electron Devices", Vol. Ed-27, No. 5, May 1980, Seiten 927 bis 930), dessen integrierter Schaltkreis nur mit einer Gleichspannung versorgt werden muß. Weiterhin liefert dieser Drucksensor am Ausgang ein frequenzanaloges Signal, das insbesondere eine digitaltechnische Weiterverarbeitung erheblich vereinfacht. Die Silizium-Membran ist Teil eines n-dotierten Silizium-Tragkörpers und befindet sich gegenüber einer Glasplatte, die auf einem die Membran umgebenden Trägerrahmen vakuumdicht aufliegt. Die der Silizium-Membran gegenüberliegende Oberfläche der Glasplatte ist metallisiert und bildet die Gegenelektrode zur Silizium-Membran. Die Kontaktierung der metallisierten Glasfläche mit dem auf dem Silizium-Grundkörper befindlichen integrierten Schaltkreis erfolgt dadurch, daß ein Teil des ebenfalls aus Silizium bestehenden Trägerrahmens p-dotiert ist und mit der metallisierten Fläche der Glasplatte kontaktiert ist. Der Elektrodenabstand beträgt etwa 2 µm und das Volumen zwischen den beiden Elektroden ist evakuiert. Die Kapazitätsänderung eines derart aufgebauten Drucksensors beträgt bei $4 \cdot 10^4$ Pa Druckdifferenz etwa 14%. Der integrierte Schaltkreis besteht im wesentlichen aus einem Schmitt-Trigger-Oszillator, dessen Schwingungsperiode von der Kapazität des druckempfindlichen Kondensators abhängt. Die Abhängigkeit der Periodendauer des Ausgangssignales vom Druck ist jedoch nichtlinear. Bei der Weiterverarbeitung des Signals sind somit zusätzliche Maßnahmen zur Linearisierung des Zusammenhangs zwischen Nutzsignal und Druck erforderlich.

Der Erfindung liegt nun die Aufgabe zugrunde, einen kapazitiven Drucksensor mit Silizium-Membran anzugeben, dessen Elektroden derart gestaltet sind, daß zwei druckempfindliche Kondensatoren entstehen, mit denen man als Teil eines einfachen RC-Oszillators ein frequenzanaloges Ausgangssignal erhält, das in einem weiten Druckbereich linear von der auf die Membran wirkenden Druckdifferenz abhängt.

Die genannte Aufgabe wird nun gelöst mit den Merkmalen des Anspruchs 1. Das Verhältnis der Kapazität der beiden Kondensatoren ist unabhängig von der Durchbiegung der Membran immer gleich groß. Die beiden Kondensatoren können somit als frequenzbestimmende Kondensatoren einer einfachen Wien-Robinson-Brücke eingesetzt werden, deren Frequenzänderung in einem weiten Druckbereich wenigstens annähernd linear zur Differenz der auf die beiden Seitenflächen der Membran wirkenden Drücke ist.

Zur weiteren Erläuterung der Erfindung wird auf die Zeichnung Bezug genommen, in deren

Figur 1 ein Drucksensor gemäß der Erfindung im Längschnitt schematisch dargestellt ist.

Figur 2 zeigt eine Draufsicht auf die Stirnfläche der Deckplatte, auf der die zweiten Elektroden angeordnet sind. In

Figur 3 ist eine Draufsicht auf den Tragkörper, der die Membran enthält, veranschaulicht.

Figur 4 zeigt eine einfache RC-Schaltung, die in Verbindung mit dem Drucksensor besonders vorteilhaft eingesetzt werden kann.

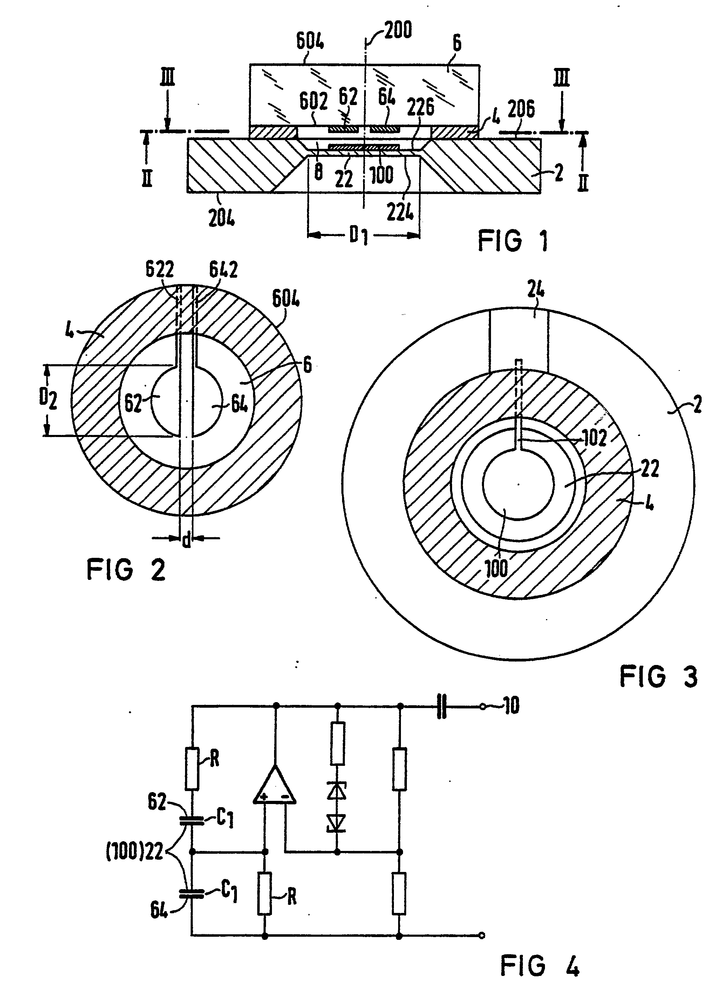

In Figur 1 ist eine Ausführungsform des Drucksensors gemäß der Erfindung in einem Längsschnitt dargestellt. Ein rotationssymmetrischer Tragkörper 2 enthält eine kreisscheibenförmige Membran 22 mit dem Durchmesser $D_1$. Der Tragkörper 2 und die Membran 22 bestehen aus Silizium. Die Flachseiten 224 und 226 der Membran 22 und die ringförmigen Stirnflächen 204 und 206 des Tragkörpers 2 liegen in zueinander parallelen Ebenen, die senkrecht zur Symmetrieachse 200 angeordnet sind. Die obere Stirnfläche 206 des Tragkörpers 2 ist teilweise mit einer ringförmigen Schicht 4 versehen, welche die Auflagefläche für eine zylindrische, beispielsweise aus Glas bestehende Deckplatte 6 bildet. Zwischen der Membran 22 und der Deckplatte 6 entsteht ein abgeschlossener Hohlraum 8. Die Verbindungen zwischen der Deckplatte 6, der Zwischenschicht 4 und dem Tragkörper 2 sind vorzugsweise vakuumdicht. Die der Membran 22 zugewandte Stirnfläche 602 der Deckplatte 6 und die der Deckplatte 6 zugewandte Flachseite 226 der Membran 22 sind teilweise mit Elektroden 62 und 64 bzw. 100 versehen, die voneinander elektrisch isoliert sind. Die Elektroden 62 und 64 sind zueinander spiegelsymmetrisch bezüglich einer die Symmetrieachse 200 enthaltenden Ebene, die senkrecht zur Schnittebene der Figur 1 ist. Die Elektroden 62 und 64 bzw. 100 sind aus einem elektrisch leitfähigen Material, vorzugsweise einem metallischen Werkstoff, insbesondere Aluminium. Die erste Elektrode 100 ist eine erste gemeinsame Elektrode und die zweite Elektrode 62 und die dritte Elektrode 64 bilden mit der gemeinsamen Elektrode 100 jeweils einen Kondensator $C_1$ bzw. $C_2$ wenigstens annähernd gleich großer Kapazität. Die Differenz des Druckes im Hohlraum 8, der auf die eine Flachseite 226 der Membran 22 wirkt, und des auf die andere Flachseite 224 der Membran 22 wirkenden Druckes führt zu einer Auslenkung der Membran 22 aus ihrer Ruhelage und somit zu einer Änderung der Kapazität der beiden Kondensatoren $C_1$ und $C_2$, die ebenfalls annähernd gleich groß ist.

Eine besonders vorteilhafte Ausführungsform des Drucksensors erhält man dadurch, daß der Tragkörper 2 derart leitfähig dotiert wird, daß die gesamte Membran 22 die gemeinsame erste Elektrode der Kondensatoren $C_1$ und $C_2$ bildet. Die Beschichtung der Membran 22 kann dann entfallen. In einer weiteren vorteilhaften Ausführungsform besteht auch die Deckplatte 6 aus Silizium und die Elektroden 62 und 64 können entsprechend dotierte Gebiete der Deckplatte 6 sein, die in monolithischer IC-Technik voneinander elektrisch isoliert sind.

In Figur 2 ist eine Draufsicht in Richtung der Deckplatte 6 auf eine Schnittfläche, welche die Zwischenschicht 4 schneidet, dargestellt. Die Elektroden 62 und 64 sind im Abstand d voneinander auf die Deckplatte 6 aufgebracht und sind mit elektrisch leitenden Zuführungen 622 und 642 bis an den Außenrand 604 der Deckplatte 6 versehen. Der Anteil der Zuführungen 622 und 642 an der Gesamtfläche der jeweiligen Elektroden 62 bzw. 64 ist gering, um deren Beitrag zur Kapazität kleinzuhalten. Der Durchmesser $D_2$ der beispielsweise halbkreisförmigen Anteile 624 und 644 der Elektroden 62 bzw. 64 beträgt vorzugsweise zwischen 30 % und 70 % des Durchmessers $D_1$ der Membran 22, um eine hohe Empfindlichkeit des Drucksensors zu erhalten.

In der Draufsicht nach Figur 3 ist im Tragkörper 2 ein Bereich 24 vorgesehen, der in monolithischer IC-Bauweise die Bauelemente für eine Auswerteelektronik und die entsprchend erforderlichen Kontaktierungsflächen für die Eingänge und Ausgänge des integrierten Schaltkreises enthält. Die Zuführung 102 der Elektrode 100 ist unterhalb der Zwischenschicht 4 zu dem Bereich 24 geführt, wie es in der Figur gestrichelt angedeutet ist. Die Zwischenschicht 4 kann aus einem Isolierstoff, beispielsweise Siliziumdioxid $SiO_2$, bestehen. In einer besonders vorteilhaften Ausführungsform besteht die Zwischenschicht 4 aus Silizium und ist Teil des Tragkörpers 2. Die erforderlichen Isolationseigenschaften im Bereich der Zuführungen 102 und 622 bzw. 642 sind dann durch geeignete Dotierung in monolithischer IC-Technik hergestellt.

Figur 4 zeigt das Prinzipschaltbild eines einfachen Wien-Robinson-Oszillators, der im Tragkörper 2 monolithisch integriert ist. Die gemeinsame Mittelelektrode der beiden Kondensatoren $C_1$ und $C_2$ wird entweder durch die Elektrode 100, die sich auf der Membran 22 befindet, oder auch die Membran 22 selbst gebildet. Die Gegenelektroden bestehen aus den auf die Deckplatte 6 aufgebrachten Elektroden 62 und 64. Die gemeinsame Mittelelektrode ist mit dem nichtinvertierenden Eingang eines Operationsverstärkers verbunden. Durch diese Gestaltung treten keine Potentialschwierigkeiten beim Verbinden der beiden Kondensatoren $C_1$ und $C_2$ mit dem Operationsverstärker auf. Am Ausgang 10 liegt somit eine Wechselspannung an, deren Frequenz f durch die Beziehung $f=1/(2 \pi RC)$ gegeben ist, wobei C die Kapazität jeweils eines der beiden Kondensatoren $C_1$ und $C_2$ ist. Diese Kapazität C ist abhängig von dem Maß der Auslenkung der Membran 22 aus ihrer Ruhelage und somit von der Differenz der Drücke, die jeweils auf die Flachseiten 224 bzw. 226 der Membran 22 wirken. Da die Kapazität C annähernd indirekt proportional zum Abstand der ersten Elektrode 100 von der zweiten bzw. dritten Elektrode 62 bzw. 64 und die Abstandsänderung annähernd direkt proportional zur auf die Membran 22 wirkenden Druckdifferenz ist, erhält man auf diese Weise eine Ausgangssignal, dessen Frequenz f wenigstens annähernd proportional zur auf die Membran 22 wirkenden Druckdifferenz ist.

**Patentansprüche**

1. Kapazitiver Drucksensor mit einer Silizium-Membran (22) und mit einer gemeinsamen ersten Elektrode (100), die mit einer zweiten Elektrode (62) und einer dritten Elektrode (64) jeweils einen Kondensator ($C_1$ bzw. $C_2$) bildet, **dadurch gekennzeichnet**, daß die zweiten und dritten Elektroden (62, 64) spiegelbildlich zueinander bezüglich einer Symmetrieebene angeordnet sind, die senkrecht auf der Oberfläche der Silizium-Membran (22) steht und die Silizium-Membran (22) und die erste Elektrode (100) in zwei gleiche Hälften teilt.

2. Kapazitiver Drucksensor nach Anspruch 1, **dadurch gekennzeichnet**, daß die gesamte Silizium-Membran (22) die gemeinsame erste Elektrode der Kondensatoren ($C_1$ und $C_2$) ist.

3. Kapazitiver Drucksensor nach Anspruch 1 oder 2, **dadurch gekennzeichnet**, daß eine Deckplatte (6) aus Silizium besteht.

4. Kapazitiver Drucksensor nach einem der Ansprüche 1 bis 3 mit einem die Membran (22) umgebenden Tragkörper (2), **dadurch gekennzeichnet**, daß die beiden Kondensatoren ($C_1$ und $C_2$) frequenzbestimmender Teil eines Wien-Robinson-Oszillators sind, der in den Tragkörper (2) integriert ist.

**Claims**

1. A capacitive pressure sensor with a silicon membrane (22) and with a common first electrode (100), which, with a second electrode (62) and a third electrode (64), forms in each case a capacitor ($C_1$ or $C_2$), characterised in that the second and third electrodes (62, 64) are arranged in mirror image to each other, relative to a plane of symmetry, which stands perpendicular to the surface of the silicon membrane (22) and divides the silicon membrane (22) and the first electrode (100) into two equal halves.

2. A capacitive pressure sensor according to claim 1, characterised in that the whole silicon membrane (22) is the common first electrode of the capacitors ($C_1$ and $C_2$).

3. A capacitive pressure sensor according to claim 1 or 2, characterised in that a cover plate (6) consists of silicon.

4. A capacitive pressure sensor according to one of claims 1 to 3, with a carrier body (2) surrounding the membrane (22), characterised in that both capacitors ($C_1$ and $C_2$) are a frequency-determining part of a Wien-Robinson-oscillator which is integrated into the carrier body (2).

**Revendications**

1. Capteur capacitif (de pression comprenant une membrane de silicium (22) et une première électrode commune (100) formant un condensateur (C1) avec une deuxième électrode (62) et un condensateur (C2) avec une troisième électrode (64), caractérisé en ce que les deuxième et troisième électrodes (62, 64) sont disposées symétriquement par rapport à un plan de symétrie qui est perpendiculaire à la surface de la membrane de silicium (22) et qui partage cette membrane et la première électrode (100) en deux moitiés égales.

2. Capteur selon la revendication 1, caractérisé en ce que toute la membrane de silicium (22) constitue la première électrode commune des condensateurs (C1 et C2).

3. Capteur selon la revendication 1 ou 2, caractérisé en ce qu'il comprend une plaque de recouvrement (6) en silicium.

4. Capteur selon une des revendications 1 à 3 et comprenant un support (2) entourant la membrane (22), caractérisé en ce que les deux condensateurs (C1 et C2) constituent une partie déterminant la fréquence d'un oscillateur de Wien-Robinson qui est intégré dans le support (2).

FIG 1

FIG 2

FIG 3

FIG 4